# EUROPÄISCHE PATENTSCHRIFT

(11) **EP 1 999 369 B1**
(45) Veröffentlichungstag und Bekanntmachung des Hinweises auf die Patenterteilung: **12.09.2012**
(21) Anmeldenummer: 07704162.2
(22) Anmeldetag: 26.01.2007
(51) Int. Cl.: F03D 11/00, F03D 11/02

(54) **ANTRIEBSSTRANG ZWISCHEN EINEM ROTOR UND EINEM GETRIEBE EINER WINDENERGIEANLAGE**
DRIVE TRAIN BETWEEN A ROTOR AND A GEAR UNIT OF A WIND POWER PLANT
LIGNE DE TRANSMISSION ENTRE UN ROTOR ET UN DISPOSITIF DE COMMANDE D'UNE INSTALLATION À ÉNERGIE ÉOLIENNE

(30) Priorität: 28.01.2006 DE 102006004096
(43) Veröffentlichungstag der Anmeldung: 10.12.2008
(73) Patentinhaber: Lohmann & Stolterfoht GmbH, 58455 Witten (DE)
(72) Erfinder: BERGER, Günter, 44577 Castrop-Rauxel (DE); BAUER, Gerhard, 58453 Witten (DE)
(74) Vertreter: Maiwald Patentanwalts GmbH
(86) Internationale Anmeldenummer: PCT/EP2007/050771
(87) Internationale Veröffentlichungsnummer: WO 2007/085644

(56) Entgegenhaltungen:
- EP-A- 1 184 567
- EP-A- 1 251 268
- EP-A- 1 457 673
- WO-A-01/94779
- WO-A-96/11338
- DE-B3- 10 242 707

## Beschreibung

Die vorliegende Erfindung betrifft einen Antriebsstrang zwischen einem Rotor und einem Getriebe einer Windenergieanlage, umfassend eine vom Rotor ausgehende und in diesem Bereich über ein erstes Rotorwellenlager gelagerte Rotorwelle, die in das Getriebe zur Übersetzung der Rotordrehzahl in eine gewünschte Generatordrehzahl einmündet.

Auf dem technischen Gebiet der Windenergieanlagen kann der Antriebsstrang zwischen dem Rotor und dem meist nachfolgenden Getriebe unterschiedlich konzipiert sein. Zum einen wird der Rotor direkt an das Getriebe angeflanscht, so dass auf eine dazwischenliegende Rotorwelle verzichtet wird. Bei dem hier interessierenden Konzept wird das vom Rotor erzeugte Drehmoment jedoch über eine distanzüberbrückende Rotorwelle zum Getriebe der Windenergieanlage übertragen. Rotorwellen werden beispielsweise bei größeren Windenergieanlagen dafür benötigt, die erzeugten Gewichts- und Windkräfte gleichmäßig im Bereich der Spitze des Turmes einer Windenergieanlage zu verteilen.

Aus der DE 102 42 707 B3 geht ein gattungsgemäßer Antriebsstrang hervor. Dieser besteht im Wesentlichen aus einem eingangsseitigen Rotor zur Umsetzung von Windenergie in ein Drehmoment, der zu einer Seite der Turmspitze der Windenergieanlage an eine Rotorwelle angeflanscht ist. An der gegenüberliegenden Seite der Turmspitze leitet die Rotorwelle die vom Rotor erzeugte Drehbewegung in ein Getriebe mit nachaeschaltetem Generator ein. Durch die Beabstandung der Baueinheiten Rotor und Getriebe mit Generator über die Rotorwelle wird eine gleichmäßig Gewichts- und Reaktionskraftverteilung im Bereich der Turmspitze erzielt. Diese Beabstandung erfordert eine geeignete Lagerung der Rotorwelle gegenüber eines Maschinenträgers, welcher die Turmspitze bildet und vertikal gegenüber dem ortsfest zum Erdboden angeordneten Turm der Windenergieanlage verdrehbar ist, um die Stellung des Rotors zur Windrichtung zu regulieren.

Die Lagerung der Rotorwelle gegenüber der Turmspitze ist hier nach Art einer Zweipunktlagerung ausgebildet und umfasst dementsprechend ein ortsnah zum Rotor angeordnetes Festlager sowie ein ortsnah zum Getriebe angeordnetes Loslager. Zwar werden durch diese Zweipunktlagerung der Rotorwelle keinerlei Lasten des Rotors in das Getriebe übertragen; jedoch ist durch die hierfür erforderlichen Lagerstellen ein entsprechender Bauteilaufwand erforderlich.

Gemäß einer weiteren Ausführungsform wird vorgeschlagen, das vordere Rotorwellenlager direkt als ein an der Nabe des Rotors angeordnetes Momentenlager auszubilden, das an dem Maschinenträger befestigt ist. Über eine gelenkige oder biegeweiche Zwischenstelle werden in diesem Falle ebenfalls keine äußeren Lasten in das Getriebe übertragen. Jedoch ist die Ausführung eines rotorseitigen Momentenlagers recht aufwendig, da hierfür gewöhnlich relativ großbauende Lager erforderlich sind.

Bei der in EP 1 457 673 A1 offenbarten technischen Lösung wird eine Dreipunktlagerung vorgeschlagen, welche das getriebeseitige Rotorwellenlager einspart, in dem diese Lagerstelle direkt ins Getriebe verlegt wird. Ein getriebeeingangsseitiges Lager übernimmt insoweit diese eingesparte Lagerstelle mit. Der Kräftefluss verläuft hier über den Planetenträger und wird über die Drehmomentstütze des Getriebes auf die Trägerkonstruktion abgeleitet. Als rotorseitiges Rotorwellenlager kommt nach wie vor ein Festlager zum Einsatz, das hier als Pendelrollenlager ausgebildet ist. In der Praxis ist ein - wenn auch nur geringe-Verschwenken der Rotorwelle um den Lagerpunkt des Rotorwellenlagers durch die Gewichtsund Windkräfte des Rotors hinzunehmen. Insbesondere bei relativ kurzen Rotorwellen kann diese Biegung allerdings so groß werden, das die Zahnstellung der getriebeeingangsseitigen Zahnräder außerhalb des optimalen Zahneingriffs gelangt, was fortschreitenden Verschleiß sowie eine Verschlechterung des Wirkungsgrades verursacht.

Darüber hinaus ist bei dieser Lösung des Standes der Technik ein geeignetes Verbindungselement zwischen Rotorwelle und der korrespondierenden eingangsseitigen Hohlwelle des Getriebes erforderlich. Als Verbindungselement kommt eine Schrumpfscheibe zum Einsatz, welche das distale Ende der getriebeeingangsseitigen Hohlwelle nach radial innen auf das korrespondierende Ende der eingeschobenen Rotorwelle drückt. Eine solche Schrumpfscheibe besitzt eine recht hohe Masse, welche die Gesamtmasse des Antriebsstranges erhöht. Gerade im Bereich der Turmspitze einer Windenergieanlage sollten die dort installierten Einrichtungen jedoch eine geringe Gesamtmasse besitzen.

Es ist die Aufgabe der vorliegenden Erfindung einen Antriebsstrang einer Windenergieanlage zu schaffen, welcher eine geringe Masse aufweist, mit einer minimalen Anzahl von Lagerstellen auskommt und dennoch einen stets optimalen Zahneingriff im Getriebe sicherstellt.

Die Aufgabe wird ausgehend von einem Antriebsstrang gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass neben einem rotorseitigen Rotorwellenlager die Rotorwelle über ein nach Art eines Momentenlagers ausgebildet zweites Rotorwellenlager gelagert ist, welches eingangsseitig im Getriebe angeordnet ist, um die anteiligen Rotorkräfte, Momente und Gewichtskräfte aufzunehmen und diese direkt zur Drehmomentstütze des Getriebes weiterzuleiten.

Der Vorteil der eifindunosoemäßen Lösung resultiert aus einer Verlagerung des zweiten, getriebeseitigen Rotorwellenlagers in das Getriebe, dessen spezielle Ausbildung als Momentenlager sicherstellt, dass im Wesentlichen nur das Drehmoment der Rotorwelle in die Verzahnungen des Getriebes eingeleitet wird und die übrigen störenden, größtenteils durch Gewichts- und Windkräfte hervorgerufenen Kräfte und Momente zur Drehmomentstütze abgeleitet werden. Da bei der erfindungsgemäßen Lösung eine Schrumpfscheibe eingangsseitig des Getriebes nicht erforderlich ist, verringert sich die Masse entsprechend.

Zusätzlich können dem zweiten Rotorwellenlager in Kraftflussrichtung gesehen Mittel zur elastischen Abkopplung des nachfolgenden Getriebeelements des Getriebes nachgeschaltet werden. Diese Mittel garantieren wegen der Abkopplung selbst bei einer extremen Belastung des Momentenlagers durch Rotorkräfte, Momente und Gewichtskräfte einen optimalen Zahneingriff der nachfolgenden Getriebeteile, da hiermit gewährleistet wird, dass lediglich das Drehmoment in die Verzahnungen des Getriebes gelangt. Als geeignetes Mittel zur elastischen Abkopplung eignet sich beispielsweise eine doppelkardanische Kupplungseinheit oder eine biegeweiche elastische Membrane, welche zentral mit der Rotorwelle in Verbindung steht, und die peripher mit dem nachfolgenden Getriebeelement des Getriebes in Verbindung steht. Eine geeignete doppelkardarnische Kupplungseinheit besteht vorzugsweise aus einem antriebsseitigen Zahnrad mit breiten- und höhenballiger Außenverzahnung, das mit einer übergreifenden Zahnhülse mit korrespondierender Innenverzahnung kämmt, welches mit einem axial beabstandet zum antriebsseitigen Zahnrad angeordneten abtriebsseitigen Zahnrad mit ebenfalls breiten- und höhenballiger Außenverzahnung kämmt.

Vorzugsweise ist das getriebeeingangsseitige Momentenlager nach Art eines gegeneinander angestellten Kegelrollenlagerpaares oder nach Art eines Dreifach-Zylinderrollenlagers ausgebildet. Es sind jedoch auch andere geeignete konstruktive Ausführungen denkbar.

Ist gemäß der vorliegenden Erfindung das getriebeeingangsseitige Lager gleichzeitig das getriebeseitig Rotorwellenlager, lässt sich das zweite, im Bereich des Rotors angeordnete Rotorwellenlager als Loslager ausbilden, welches im Vergleich zu einem üblicherweise hier eingesetzten Festlager einfacher aufgebaut und weniger schadensanfällig ist. Das rotorseitige Loslager ist vorzugsweise konstruktiv nach Art eines Pendelrollenlagers ausgeführt. Das Pendelrollenlager muss als Loslager keine Axialkräfte aufnehmen und ist in soweit entsprechend weniger belastet, was dessen Lebensdauer verlängert. Weil die vom Rotor aufgrund des Winddruckes verursachten Axialkräfte durch die Rotorwelle in das Momentenlager eingeleitet werden, gelangen diese über das Gehäuse des Getriebes und dessen Momentenstütze in den Turm der Windenergieanlage. Zwischen Momentenstütze und Turm der Windenergieanlage kann vorteilhafterweise eine elastische Aufhängung angeordnet sein. Selbst eine durch den Rotor verursachte pulsierende Axialkraft verursacht bei der erfindungsgemäßen Lösung keine nachteiligen Axialbewegungen bei der getriebeeingangsseitigen Lagerstelle.

Gemäß einer weiteren, die Erfindung verbessernden Maßnahme ist die Rotorwelle über einen getriebeeingangsseitigen Flansch mit dem Getriebe verbunden, wobei die Flanschverbindung z. B. als Schraub-Stift-Verbindung ausgeführt ist. Diese kraft- und formschlüssige Verbindung gewährleistet eine leichte Montage und Demontage der Rotorwelle am Getriebe.

Gemäß einer weiteren die Erfindung verbessernden Maßnahme ist vorgesehen, dass das antriebsseitige Zahnrad der doppelkardanischen Kupplungseinheit über eine Schraubverbindung rückwärtig an den getriebeeingangsseitigen Flansch befestigt ist, so dass sich das auf dem Flansch angeordnete zweite Rotorwellenlager vom auf der Getriebeinnenseite befindlichen kleinen Durchmesser des Flansches her montieren lässt. Durch die Möglichkeit, das Momentenlager von der Getriebeinnenseite her zu montieren, braucht dieses nicht über den im Durchmesser relativ größeren Flanschanschluss geschoben werden, so dass das erfindungsgemäße Momentenlager sich relativ kleinbauend ausführen lässt. Zu dem kann durch die Schraubverbindung zwischen antriebsseitigem Zahnrad und Flansch eine Einstellung des Lagerspiels in einfacher Weise durchgeführt werden. Somit ist das auf dem Flansch angeordnete Momentenlager im montierten Zustand zu einer Seite hin von einem Absatz des Flansches begrenzt; zur gegenüberliegenden Seite hin wird das Momentenlager durch Anlage des antriebsseitigen Zahnrades oder eines anderen Getriebeelements eingefasst.

Weitere die Erfindung verbessernde Maßnahmen werden nachstehend gemeinsam mit der Beschreibung eines bevorzugten Ausführungsbeispiels der Erfindung näher dargestellt. Es zeigt:
- Figur 1: eine schematische Darstellung eines Antriebsstrangs einer Windenergieanlage,
- Figur 2: einen Teilschnitt wesentlicher Bestandteile des Antriebsstrangs in einer konstruktiven Ausführung,
- Figur 3: eine schematische Darstellung einer ersten Ausführungsform des Momentenlagers, und
- Figur 4: eine schematische Darstellung einer zweiten Ausführungsform des Momentenlagers.

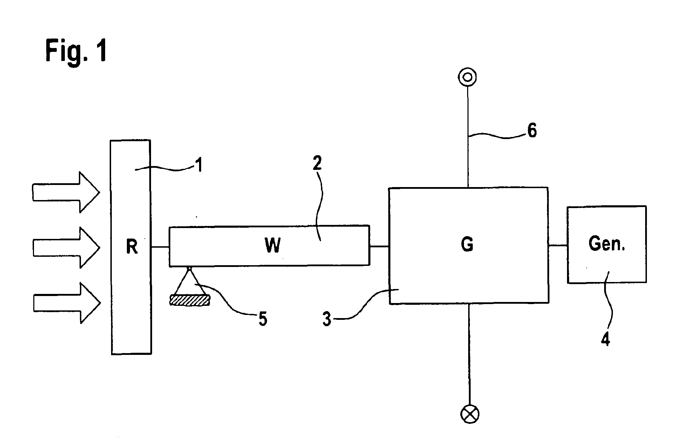

Gemäß Figur 1 besteht der Antriebsstrang einer Windenergieanlage aus einem Rotor 1, welcher durch Windströmung in Drehbewegung versetzt wird und somit ein Drehmoment erzeugt, welches über eine Rotorwelle 2 an ein Getriebe 3 zur Übersetzung der Rotordrehzahl geleitet wird. Das Getriebe 3, welches in diesem Ausführungsbeispiel zumindest teilweise als Planetengetriebe ausgebildet ist, wandelt die eingangsseitige langsame Drehzahl in eine schnellere Drehzahl zum Antrieb eines nachgeschalteten Generators 4 zur Erzeugung von elektrischem Strom um.

Bei dem Antriebsstrang findet eine Dreipunktlagerung der Rotorwelle 2 statt.
Dementsprechend ist die Rotorwelle 2 im Bereich des Rotors 1 über ein erstes Rotorwellenlager 5 gelagert, welches als Festlager ausgebildet ist. Die Lagerung der Rotorwelle an der gegenüberliegenden Seite findet - wie nachfolgend eingehender beschrieben - innerhalb des Getriebes 3 statt, dessen Drehmomentstütze 6 die über das Getriebegehäuse abgeleiteten anteiligen Rotorkräfte, Momente und Gewichtskräfte aufnimmt.

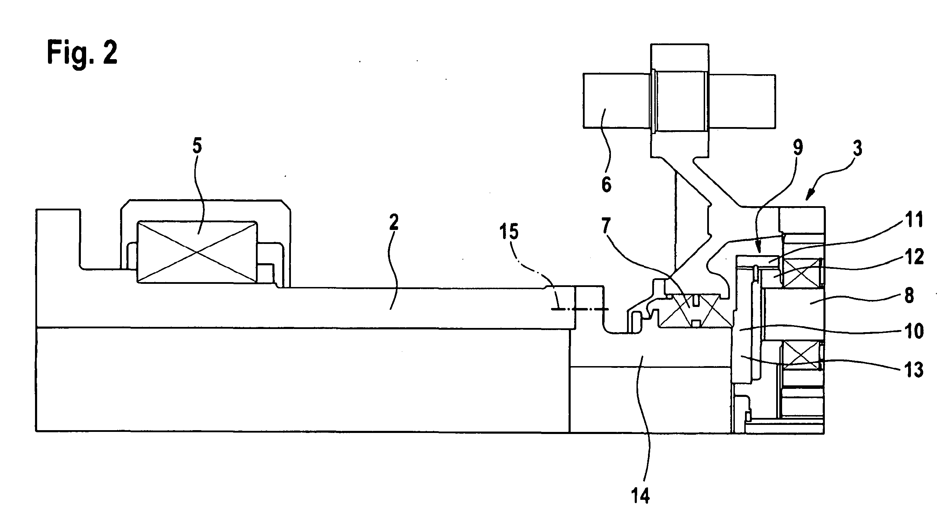

Nach Figur 2 ist die Rotorwelle 2 seitens des Getriebes 3 über ein nach Art eines Momentenlagers ausgebildetes zweites Rotorwellenlager 7 gelagert. Zur Ausführung der Funktion eines Momentenlagers ist das zweite Rotorwellenlager 7 hier als ein gegeneinander angestelltes Kegelrollenlagerpaar ausgeführt.

Dem zweiten Rotorwellenlager 7 folgt in Kraftflussrichtung gesehen zum Zwecke einer elastischen Abkopplung des nachfolgenden Getriebeelements 8 eine doppelkardanische Kupplungseinheit 9, welche aus einem antriebsseitigen Zahnrad 10 mit breiten- und höhenballiger Außenverzahnung besteht, welches mit einer übergreifenden Zahnhülse 11 mit korrespondierender Innenverzahnung kämmt. Die Zahnhülse 11 bestimmt durch ihre axiale Erstreckung die kardanische Wirkung dieser doppelkardanischen Kupplungseinheit 9. Dementsprechend ist axial beabstandet zum antriebsseitigen Zahnrad 10 ein abtriebsseitiges Zahnrad 12 mit ebenfalls breiten- und höhenballiger Verzahnung vorgesehen. Das abtriebsseitige Zahnrad 12 wirkt mit dem nachfolgenden Getriebeelement 8 zusammen, welches hier ein Planetenträger einer nachgeschalteten - nicht vollständig dargestellten - Planetenstufe ist.

Das antriebsseitige Zahnrad 10 der doppelkardanischen Kupplungseinheit 9 ist über eine Schraub- und Stiftverbindung 13 an einen getriebeeingangsseitigen Flansch 14 befestigt. Durch die Schraub- und Stiftverbindung 13 lässt sich das auf dem Flansch 14 angeordnete zweite Rotorwellenlager 7 von der Getriebeinnenseite her auf den Flansch 14 montieren, also vom kleineren Durchmesser her, so dass das Rotorwellenlager 7 mit einem kleinen Durchmesser ausgeführt werden kann. Denn an der Getriebeaußenseite wird der Flansch 14 z.B. über eine Schraub-Stift-Verbindung 15 mit der Rotorwelle 2 lösbar verbunden. Zur Ausführung der Schraub-Stift-Verbindung 15 ist an dieser Stelle ein größerer Durchmesser des Flansches 14 erforderlich.

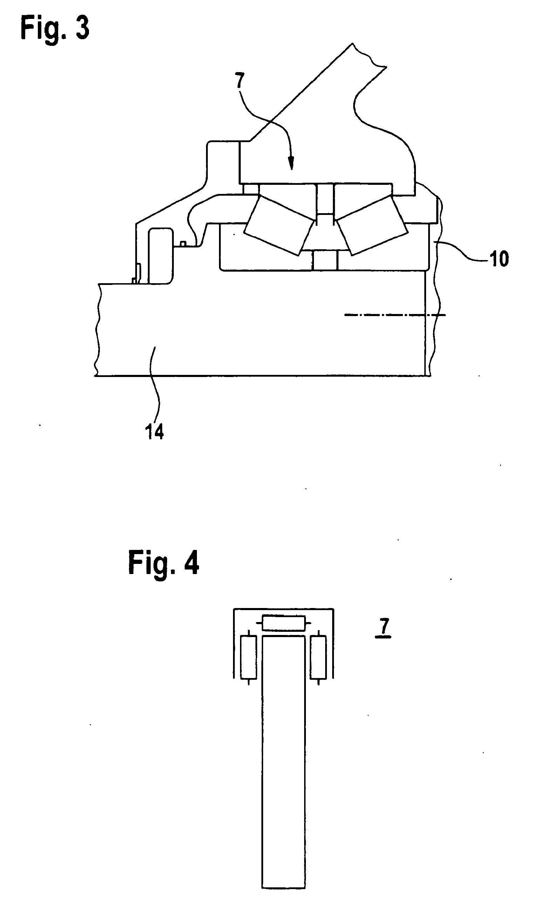

Gemäß Figur 3 kann das als Momentenlager ausgebildete zweite Rotorwellenlager 7 nach einer ersten Ausführungsform als gegeneinander angestelltes Kegelrollenlagerpaar ausgeführt werden. Alternativ hierzu kann gemäß Figur 4 das zweite Rotorwellenlager 7 auch als Dreifach-Zylinderrollenlager ausgebildet sein, um ebenfalls die Funktion eines Momentenlagers zu erhalten.

Die Erfindung ist nicht beschränkt auf das vorstehend beschriebene bevorzugte Ausführungsbeispiel. So kann als Mittel zur elastischen Abkopplung zwischen dem zweiten Rotorwellenlager 7 und dem eingangsseitigen Getriebeelement 8 anstelle der doppelkardanischen Kupplungseinheit 9 beispielsweise auch eine biegeweiche elastische Membrane vorgesehen werden, welche über den Bereich ihrer Mitte mit der Rotorwelle 2 in Verbindung steht, wogegen die biegeweich elastische Membran peripher mit dem nachfolgenden Getriebeelement 8 des Getriebes 3 in Verbindung steht.

### Bezugszeichenliste

- **1**: Rotor
- **2**: Rotorwelle
- **3**: Getriebe
- **4**: Generator
- **5**: erstes Rotorwellenlager
- **6**: Drehmomentstütze
- **7**: zweites Rotorwellenlager
- **8**: Getriebeelement
- **9**: doppelkardanische Kupplungseinheit
- **10**: antriebsseitiges Zahnrad
- **11**: Zahnhülse
- **12**: abtriebsseitiges Zahnrad
- **13**: Schraub- und Stiftverbindung
- **14**: Flansch
- **15**: Schraub-Stift-Verbindung

## Patentansprüche

1. Antriebsstrang zwischen einem Rotor (1) und einem Getriebe (3) mit Drehmomentstütze (6) einer Windenergieanlage, umfassend eine vom Rotor (1) ausgehende und in diesem Bereich über ein erstes Rotorwellenlager (5) gelagerte Rotorwelle (2), die in das Getriebe (3) zur Übersetzung der Rotordrehzahl in eine gewünschte Generatordrehzahl einmündet,
**dadurch gekennzeichnet, dass** die Rotorwelle (2) über ein nach Art eines Momentenlagers ausgebildetes zweites Rotorwellenlager (7) gelagert ist, welches eingangsseitig im Getriebe (3) angeordnet ist, um die anteiligen Rotorkräfte, Momente und Gewichtskräfte aufzunehmen und diese direkt zur Drehmomentstütze (6) weiterzuleiten.

2. Antriebsstrang nach Anspruch 1,
**dadurch gekennzeichnet, dass** dem zweiten Rotorwellenlager (7) in Kraftflussrichtung Mittel zur elastischen Abkopplung des nachfolgenden Getriebeelements (8) des Getriebes (3) nachgeschaltet werden.

3. Antriebsstrang nach Anspruch 2,
**dadurch gekennzeichnet, dass** als Mittel zur elastischen Abkopplung eine doppelkardanische Kupplungseinheit (9) vorgesehen ist.

4. Antriebsstrang nach Anspruch 3,
**dadurch gekennzeichnet, dass** die doppelkardanische Kupplungseinheit aus einem antriebsseitigen Zahnrad (10) mit breiten- und höhenballiger Außenverzahnung besteht, das mit einer übergreifenden Zahnhülse (11) mit korrespondierender Innenverzahnung kämmt, welches mit einem axial beabstandet zum antriebsseitigen Zahnrad (10) angeordneten abtriebsseitigen Zahnrad (12) mit ebenfalls breiten- und höhenballiger Außenverzahnung kämmt.

5. Antriebsstrang nach Anspruch 2,
**dadurch gekennzeichnet, dass** als Mittel zur elastischen Abkopplung eine biegeweiche elastische Membrane vorgesehen ist, die zentral mit der Rotorwelle (2) in Verbindung steht, und die peripher mit dem nachfolgenden Getriebeelement (8) des Getriebes (3) in Verbindung steht.

6. Antriebsstrang nach Anspruch 1,
**dadurch gekennzeichnet, dass** das Momentenlager nach Art eines gegeneinander angestellten Kegelrollenlagerpaares oder nach Art eines Dreifach-Zylinderrollenlagers ausgebildet ist.

7. Antriebsstrang nach Anspruch 1,
**dadurch gekennzeichnet, dass** das nachfolgende Getriebeelement des Getriebes (3) Bestandteil einer eingangsseitigen Planetengetriebestufe ist.

8. Antriebsstrang nach Anspruch 1,
**dadurch gekennzeichnet, dass** das erste Rotorwellenlager (5) als ein Loslager ausgebildet ist.

9. Antriebsstrang nach Anspruch 8,
**dadurch gekennzeichnet, dass** das Loslager konstruktiv nach Art eines Pendelrollenlagers ausgeführt ist.

10. Antriebsstrang nach Anspruch 1,
**dadurch gekennzeichnet, dass** die Rotorwelle (2) über einen getriebeeingangsseitigen Flansch (14) mit dem Getriebe (3) verbunden ist, wobei die Flanschverbindung als Schraub-Stift-Verbindung (15) ausgeführt ist.

11. Antriebsstrang nach einem der vorstehenden Ansprüche,
**dadurch gekennzeichnet, dass** das antriebsseitige Zahnrad (10) der doppelkardanischen Kupplungseinheit über eine Schraub- und Stiftverbindung (13) an dem separaten getriebeeingangsseitigen Flansch (14) befestigt ist, so dass sich das auf dem Flansch (14) angeordnete zweite Rotorwellenlager (7) vom auf der Getriebeinnenseite befindlichen kleineren Durchmesser des Flansches (14) her montieren lässt.

12. Antriebsstrang nach Anspruch 11,
**dadurch gekennzeichnet, dass** das Lagerspiel des zweiten Rotorwellenlagers (7) über die Schraubverbindung (13) einstellbar ist.

## Claims

1. A drive train between a rotor (1) and a transmission (3) having a torque support (6) for a wind turbine generator system, comprising a rotor shaft (2) extending from the rotor (1) and supported in this area by a first rotor shaft bearing (5) and extending to the transmission (3) for converting the rotor speed into a desired generator speed,
**characterized in that** said rotor shaft (2) is supported by a second rotor shaft bearing (7) formed in the manner of a moment bearing which is arranged on the input side within the transmission (3) in order to receive the partial rotor forces, moments and weight forces and to pass them on to the torque support (6).

2. The drive train according to claim 1,
**characterized in that** means for elastic decoupling of the downstream transmission element (8) of the transmission (3) are arranged downstream of the second rotor shaft bearing (7) as seen in the direction of the force flow.

3. The drive train according to claim 2,
**characterized in that** as a means for elastic decoupling a double-cardan coupling unit (9) is provided.

4. The drive train according to claim 3,
**characterized in that** said double-cardan coupling unit is comprised of a gear (10) on the input side having external toothing dome-shaped in the width and elevation dimension which is in mesh with an overlapping toothed sleeve (11) having a corresponding internal toothing which is in mesh with a gear (12) on the output side arranged axially spaced with respect to the gear (10) on the input side and also having external toothing dome-shaped in the width and elevation dimension.

5. The drive train according to claim 2,
**characterized in that**, as a means for elastic decoupling, a flexible elastic membrane is provided which has its center connected to the rotor shaft (2) and its periphery connected to the downstream transmission element (8) of the transmission (3).

6. The drive train according to claim 1,
**characterized in that** the moment bearing is designed in the manner of a mutually angled, tapered roller bearing pair or in the manner of a triple cylinder roller bearing.

7. The drive train according to claim 1,
**characterized in that** the downstream transmission element of the transmission (3) is part of a planet transmission stage on the input side.

8. The drive train according to claim 1,
**characterized in that** the first rotor shaft bearing (5) is formed as a loose bearing.

9. The drive train according to claim 8,
**characterized in that** said loose bearing is constructed in the manner of a spherical roller bearing.

10. The drive train according to claim 1,
**characterized in that** said rotor shaft (2) is connected with the transmission (3) via a flange (14) on the input side of the transmission, wherein the flange connection is formed as a bolt-stud connection (15).

11. The drive train according to any one of the preceding claims,
**characterized in that** the gear (10) on the input side of the double-cardan coupling unit is fixed on the separate flange (14) on the transmission input side by means of a bolt and stud connection (13), so that the second rotor shaft bearing (7) arranged on the flange (14) can be mounted from the side of the smaller diameter of the flange (14) present on the inside of the tranmission.

12. The drive train according to claim 11,
**characterized in that** the bearing backlash of the second rotor shaft bearing (7) is adjustable by the bolt connection (13).

## Revendications

1. Train d'entraînement entre un rotor (1) et une transmission (3) avec support de couple (6) d'une installation d'énergie éolienne, comprenant un arbre de rotor (2) partant du rotor (1) et monté dans cette région via un premier palier d'arbre (5), ledit arbre débouchant dans la transmission (3) pour conversion de la vitesse de rotation du rotor en une vitesse de rotation désirée d'un générateur,
**caractérisé en ce que** l'arbre de rotor (2) est monté via un second palier d'arbre (7) réalisé à la manière d'un palier-couple qui est agencé du côté entrée dans la transmission (3), afin d'encaisser les efforts du rotor, les couples et les efforts pondéraux participants et de transmettre ceux-ci directement au support de couple (6).

2. Train d'entraînement selon la revendication 1,
**caractérisé en ce que** des moyens destinés au découplage élastique de l'élément successif (8) de la transmission (3) sont disposés après le second palier d'arbre (7) dans la direction du flux des efforts.

3. Train d'entraînement selon la revendication 2,
**caractérisé en ce qu'**il est prévu une unité de couplage (9) à double cardan à titre de moyens pour le découplage élastique.

4. Train d'entraînement selon la revendication 3,
**caractérisé en ce que** l'unité de couplage à double cardan est constituée d'un engrenage coté entraînement (10) avec une denture extérieure bombée dans le sens de la largeur et de la hauteur, qui engrène avec une douille dentée (11) qui la coiffe et est dotée d'une denture intérieure correspondante, ledit engrenage étant en engrènement avec un engrenage (12) du côté sortie, agencé axialement à distance de l'engrenage coté entraînement (10), avec une denture extérieure bombée également dans le sens de la largeur et de la hauteur.

5. Train d'entraînement selon la revendication 2,
**caractérisé en ce qu'**il est prévu à titre de moyens pour le découplage élastique une membrane élastique souple à la flexion, qui est reliée au centre avec l'arbre de rotor (2) et qui est reliée en périphérie à l'élément successif (8) de la transmission (3).

6. Train d'entraînement selon la revendication 1,
**caractérisé en ce que** le palier-couple est réalisé à la manière d'une paire de paliers à rouleaux coniques agencés l'un contre l'autre, ou à la manière d'un palier triple à rouleaux cylindriques.

7. Train d'entraînement selon la revendication 1,
**caractérisé en ce que** l'élément successif de la transmission (3) est un élément constitutif d'un étage de transmission à planétaires situé du côté entrée.

8. Train d'entraînement selon la revendication 1,
**caractérisé en ce que** le premier palier d'arbre (5) est réalisé sous forme de palier fou.

9. Train d'entraînement selon la revendication 8,
**caractérisé en ce que** le palier fou est réalisé sur le plan structurel à la manière d'un palier à rouleaux pendulaires.

10. Train d'entraînement selon la revendication 1,
**caractérisé en ce que** l'arbre de rotor (2) est relié à la transmission (3) via une bride (14) du côté de l'entrée de la transmission, ladite liaison à bride étant réalisée sous forme de liaison à vis et à tige (15).

11. Train d'entraînement selon l'une des revendications précédentes,
**caractérisé en ce que** l'engrenage du côté entraînement (10) de l'unité d'accouplement à double cardan est fixé sur la bride séparée (14) du côté de l'entrée de la transmission via une liaison à vis et à tige (13), de sorte que le second palier d'arbre (7) agencé sur la bride (14) peut être monté depuis le plus petit diamètre de la bride (14) qui se trouve sur le côté intérieur de la transmission.

12. Train d'entraînement selon la revendication 11,
**caractérisé en ce que** le jeu du second palier d'arbre (7) est réglable via la liaison à vis (13).
